# EUROPÄISCHE PATENTANMELDUNG

(11) **EP 4 722 442 A1**
(43) Veröffentlichungstag der Anmeldung: **08.04.2026**
(21) Anmeldenummer: 25190603.8
(22) Anmeldetag: 21.07.2025
(51) Int. Cl.: D06F 93/00, D06F 95/00

(54) **WÄSCHESTÜCKERFASSUNGSSYSTEM MIT EINER STEUERUNG**

(30) Priorität: 01.10.2024 DE 102024209590
(71) Anmelder: BSH Hausgeräte GmbH, 81739 München (DE)
(72) Erfinder: Oertel, Christian, 10553 Berlin (DE); Amtsfeld, Philipp, 13595 Berlin (DE); Kübler, Julia, 80335 München (DE)

(57) **Zusammenfassung**

Wäschestückerfassungssystem (100), umfassend: zumindest einen Wäschestückaufnahmebereich (101) zur Aufnahme von Wäschestücken (103a,b), wobei die Wäschestücke (103a,b) jeweils ein Identifikationselement (105a,b) aufweisen, welches eine Identifikationskennung aufweist, welche mit einem Wäschestück (103a,b) korreliert ist; und ein Sensorelement (107a), welches ausgebildet ist, die Identifikationselemente (105a,b) der Wäschestücke (103a,b) in einem Sensorerfassungsbereich (109a) innerhalb des zumindest einen Wäschestückaufnahmebereichs (101) zu erfassen, eine Steuerung (111), welche mit dem Sensorelement (107a) kommunikationstechnisch verbunden ist, und eine Nutzerschnittstelle (113), welche mit der Steuerung (111) kommunikationstechnisch verbunden ist, wobei die Steuerung (111) ausgebildet ist, basierend auf den Identifikationskennungen der erfassten Identifikationselemente (105a,b) zumindest eine Positionsinformation der Wäschestücke (103a,b) in dem zumindest einen Wäschestückaufnahmebereich (101) zu erzeugen und die zumindest eine Positionsinformation der Wäschestücke (103a,b) an die Nutzerschnittstelle (113) zu übermitteln, wobei die Nutzerschnittstelle (113) ausgebildet ist, einem Nutzer des Wäschestückerfassungssystems (100) die zumindest eine Positionsinformation der Wäschestücke (103a,b) mitzuteilen.

## Beschreibung

Die vorliegende Erfindung betrifft ein Wäschestückerfassungssystem mit einer Steuerung und ein Verfahren zum Betreiben des Wäschestückerfassungssystems.

Ein Nutzer kann eine Vielzahl von Wäschestücken besitzen, die an unterschiedlichen Orten unterschiedlich lange aufbewahrt werden. Beispielsweise werden in einem Wäschekorb Wäschestücke typischerweise nur temporär aufbewahrt und in einem Wäscheschrank bis zur jeweils nächsten Nutzung zwischengelagert. Die jeweils nächste Nutzung kann von einer Präferenz des Nutzers, einem Wetter, einer Jahreszeit und weiteren Faktoren abhängen. Für eine effiziente Nutzung der Wäschestücke kann es für den Nutzer notwendig sein, die aktuelle Position der jeweiligen Wäschestücke zu kennen.

Es ist die der Erfindung zugrundeliegende Aufgabe, ein Wäschestückerfassungssystem sowie ein Verfahren zum Betreiben des Wäschestückerfassungssystems anzugeben, mit dem eine möglichst effiziente Erfassung von Wäschestücken erreicht werden kann.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe gelöst durch ein Wäschestückerfassungssystem, umfassend: zumindest einen Wäschestückaufnahmebereich zur Aufnahme von Wäschestücken, wobei die Wäschestücke jeweils ein Identifikationselement aufweisen, welches eine Identifikationskennung aufweist, welche mit einem Wäschestück korreliert ist; und ein Sensorelement, welches ausgebildet ist, die Identifikationselemente der Wäschestücke in einem Sensorerfassungsbereich innerhalb des zumindest einen Wäschestückaufnahmebereichs zu erfassen, eine Steuerung, welche mit dem Sensorelement kommunikationstechnisch verbunden ist, und eine Nutzerschnittstelle, welche mit der Steuerung kommunikationstechnisch verbunden ist, wobei die Steuerung ausgebildet ist, basierend auf den Identifikationskennungen der erfassten Identifikationselemente zumindest eine Positionsinformation der Wäschestücke in dem zumindest einen Wäschestückaufnahmebereich zu erzeugen und die zumindest eine Positionsinformation der Wäschestücke an die Nutzerschnittstelle zu übermitteln, wobei die Nutzerschnittstelle ausgebildet ist, einem Nutzer des Wäschestückerfassungssystems die zumindest eine Positionsinformation der Wäschestücke mitzuteilen.

Dadurch wird der technische Vorteil erreicht, dass dem Nutzer die Position der Wäschestücke in dem Wäschestückaufnahmebereich automatisch mitgeteilt werden kann. Beispielsweise kann der Nutzer damit informiert werden, welche Wäschestücke in einem Wäschekorb liegen und gewaschen werden sollten. Beispielsweise können auch Wäschestückaufnahmebereiche erfasst werden, mit welchen der Nutzer selten agiert, wie beispielsweise ein Bereich mit eingelagerten Wäschestücken in einem Keller des Nutzers.

Die Wäschestücke können insbesondere jeweils eine Vielzahl von Identifikationselementen aufweisen. Beispielsweise kann dieselbe Identifikationskennung eines Wäschestücks mit der Vielzahl von Identifikationselementen des Wäschestücks korreliert sein. Die Vielzahl von Identifikationselementen kann beispielsweise eine RFID, einen QR-Code und/oder alphanumerische Zeichen, insbesondere Textzeichen, umfassen. Die Identifikationselemente können Wäscheetiketten und/oder in die Wäschestücke eingenähte Identifikationsfäden umfassen.

Die Identifikationselemente der Wäschestücke können insbesondere jeweils mit einer Vielzahl von Identifikationskennungen der Wäschestücke korreliert sein. Beispielsweise kann ein Identifikationselement eines Wäschestücks mit einer Vielzahl von Identifikationskennungen des Wäschestücks korreliert sein, beispielsweise bei einer Verwendung einer RFID mit einem elektronischen Productcode, EPC, und einer Transponder Identnummer, TID.

Das Wäschestückerfassungssystem kann insbesondere in einer Haushaltsumgebung des Nutzers angeordnet sein.

Der zumindest eine Wäschestückaufnahmebereich kann einen ersten Wäschestückaufnahmebereich und einen zweiten Wäschestückaufnahmebereich umfassen. Der erste Wäschestückaufnahmebereich und der zweite Wäschestückaufnahmebereich können räumlich beabstandet sein.

Das Sensorelement und/oder das weitere Sensorelement und/oder die Auslesevorrichtung, können dem ersten Wäschestückaufnahmebereich zugeordnet sein und über eine erste Stromversorgung mit Energie versorgt werden.

Ein oder mehrere dritte Sensorelemente und/oder eine weitere Auslesevorrichtung können dem zweiten Wäschestückaufnahmebereich zugeordnet sein und über eine zweite Stromversorgung mit Energie versorgt werden.

Die erste und/oder die zweite Stromversorgung kann eine interne Stromquelle, wie beispielsweise eine Batterie und/oder ein Energieerntesystem (im Englischen auch als "Energy Harvesting" bezeichnet) umfassen. Alternativ oder zusätzlich kann die erste und/oder die zweite Stromversorgung einen Anschluss an eine externe Stromquelle umfassen, insbesondere einen Anschluss an eine Netzspannung.

In einer vorteilhaften Ausführungsform umfasst der zumindest eine Wäschestückaufnahmebereich einen Bereich eines Wäschepflegegeräts, insbesondere einen Bereich einer Wäschekammer eines Wäschepflegegeräts, einen Bereich eines Möbelstücks, insbesondere eines Kleiderschranks, eines stillen Dieners oder einer Wäscheleiter, einen Bereich eines Wäschekorbs, einen Bereich einer Wäschestückaufhängungsvorrichtung und/oder einen Bereich eines Zimmers.

Dadurch wird der technische Vorteil erreicht, dass dem Nutzer bereichsspezifische Positionsinformationen bereitgestellt werden können.

In einer vorteilhaften Ausführungsform umfasst das Wäschestückerfassungssystem eine Auslesevorrichtung, wobei das Sensorelement, und/oder ein weiteres Sensorelement, mit der Auslesevorrichtung elektrisch verbunden, wobei die Auslesevorrichtung ausgebildet ist, die Identifikationskennungen auszulesen und an die Steuerung zu übermitteln, wobei die Steuerung ausgebildet ist, die Identifikationskennungen in einer Wäscheliste zu speichern.

Dadurch wird der technische Vorteil erreicht, dass die Identifikationskennungen durch die Steuerung effizient verarbeitet werden können.

Die Wäscheliste kann eine eindeutige Wäscheliste sein, d.h. eine Wäscheliste, in der Identifikationskennungen der Wäschestücke nicht mehrfach enthalten sind.

In einer vorteilhaften Ausführungsform umfasst die Auslesevorrichtung eine RFID-Auslesevorrichtung und umfasst das Identifikationselement ein RFID-Element, wobei insbesondere die Identifikationskennungen elektronische Productcodes, EPC, umfassen.

Dadurch wird der technische Vorteil erreicht, dass das Identifikationselement bereits einen vom Hersteller vorgegebenen, unveränderlichen und eindeutigen Code wie eine TID (Transponder Identnummer) enthalten kann, welcher bereits eine eindeutige Identifikation gewährleisten kann. Durch die, insbesondere veränderbare, EPC kann eine individuelle Codierung des Wäschestücks und ebenfalls eine eindeutige Identifikationskennung erreicht werden. Hierbei kann die EPC durch ein Passwort gesichert sein und damit vor unberechtigter Veränderung durch Dritte geschützt sein.

Die RFID-Auslesevorrichtung kann ausgebildet sein, die Wäschestücke basierend auf dem Standard ISO 18000-63 auszulesen. Die RFID-Auslesevorrichtung kann ausgebildet sein, zuerst den EPC des RFID-Elements der Wäschestücke auszulesen, bevor weitere Daten des RFID-Elements der Wäschestücke ausgelesen werden. Dadurch kann die Erfassungsrate der Wäschestücke erhöht werden.

Die RFID-Auslesevorrichtung kann ausgebildet sein, die RFID-Elemente der Wäschestücke in kurzen Zeitabständen, insbesondere in weniger als 0,05 Sekunden, bevorzugt ca. alle 0,01 Sekunden, auszulesen.

Entsprechend kann das Sensorelement und/oder das weitere Sensorelement einen RFID-Sensor mit einer Antenne umfassen. Um sicherzustellen, dass sich mehrere RFID-Sensoren im näheren Umfeld des Wäschestückaufnahmebereichs nicht gegenseitig beeinflussen, kann die Steuerung ausgebildet sein, einen Frequenzkanal des RFID-Sensors anzupassen. Damit können Interferenzen beim Auslesen verhindert oder verringert werden.

Alternativ oder zusätzlich umfasst die Auslesevorrichtung eine optische Auslesevorrichtung und das Identifikationselement einen optischen Code, insbesondere einen 1D-Code wie einen Barcode und/oder einen 2D-Code wie einen QR-Code oder eine Datenmatrix.

Alternativ oder zusätzlich umfasst die Auslesevorrichtung eine elektromagnetische Auslesevorrichtung, insbesondere eine NFC-Auslesevorrichtung, eine RAINFC-Auslesevorrichtung, eine Radar-Auslesevorrichtung und/oder eine Bluetooth-Auslesevorrichtung, die ausgebildet ist, von den Identifikationselementen der Wäschestücke die Identifikationskennungen auszulesen.

In einer vorteilhaften Ausführungsform ist die Steuerung ausgebildet, in einem ersten Zeitintervall die Identifikationskennungen der erfassten Identifikationselemente in einer ersten Wäscheliste zu speichern, wobei die Steuerung ausgebildet ist, in einem dem ersten Zeitintervall folgenden zweiten Zeitintervall die Identifikationskennungen der erfassten Identifikationselemente in einer zweiten Wäscheliste zu speichern, wobei die Steuerung ausgebildet ist, die zumindest eine Positionsinformation der Wäschestücke basierend auf einer Änderung zwischen der ersten und der zweiten Wäscheliste zu erzeugen.

Dadurch wird der technische Vorteil erreicht, dass die Steuerung die Positionsinformation effizient erzeugen kann.

Die erste Wäscheliste kann eine eindeutige Wäscheliste sein, d.h. eine Wäscheliste, in der Identifikationskennungen der Wäschestücke nicht mehrfach enthalten sind. Die zweite Wäscheliste kann eine eindeutige Wäscheliste sein, d.h. eine Wäscheliste, in der Identifikationskennungen der Wäschestücke nicht mehrfach enthalten sind.

Die Änderung zwischen der ersten Wäscheliste und der zweiten Wäscheliste kann Identifikationskennungen umfassen, die in der ersten Wäscheliste nicht enthalten sind und in der zweiten Wäscheliste enthalten sind. Insofern kann die Änderung zwischen der ersten Wäscheliste und der zweiten Wäscheliste Identifikationskennungen von in dem Wäschestückaufnahmebereich neu erfassten Wäschestücken umfassen.

Die Änderung zwischen der ersten Wäscheliste und der zweiten Wäscheliste kann Identifikationskennungen umfassen, die in der ersten Wäscheliste enthalten sind und in der zweiten Wäscheliste nicht mehr enthalten sind. Insofern kann die Änderung zwischen der ersten Wäscheliste und der zweiten Wäscheliste Identifikationskennungen von in dem Wäschestückaufnahmebereich nicht mehr erfassten Wäschestücken umfassen.

Beispielsweise kann die Auslesevorrichtung oder die Steuerung in einer Ausführungsform ausgebildet sein, die erste Wäscheliste und/oder die zweite Wäscheliste in einem nichtflüchtigen Speicher des Wäschepflegegeräts zu speichern. Die Auslesevorrichtung oder die Steuerung kann ausgebildet sein, bei einem Fehlerereignis die erste Wäscheliste und/oder die zweite Wäscheliste aus dem Speicher auszulesen und der Steuerung bereitzustellen und/oder in regelmäßigen Zeitintervallen die erste Wäscheliste und/oder die zweite Wäscheliste der Steuerung bereitzustellen.

Dadurch können die Wäschestücke in dem Wäschestückaufnahmebereich auch nach Auftreten des Fehlerereignisses identifiziert werden. Das Fehlerereignis kann beispielsweise ein Stromausfall einer Stromversorgung des Wäschepflegegeräts und/oder der Auslesevorrichtung sein, ein Auslesefehler der Auslesevorrichtung oder ein Kommunikationsfehler des Wäschestückerfassungssystems sein.

Beispielsweise kann die Auslesevorrichtung in einer Ausführungsform ausgebildet sein, einen Teil einer Identifikationskennung eines Wäschestücks auszulesen, und, wenn der Teil der Identifikationskennung des Wäschestücks einer Referenzidentifikationsinformation der Wäschestücke entspricht, die während des ersten Zeitintervalls ausgelesene Identifikationskennung des Wäschestücks in der ersten Wäscheliste zu speichern und/oder die während des zweiten Zeitintervalls ausgelesene Identifikationskennung des Wäschestücks in der zweiten Wäscheliste zu speichern.

Dadurch wird der technische Vorteil erreicht, dass in der ersten und/oder in der zweiten Wäscheliste nur Identifikationskennungen gespeichert werden können, die Wäschestücken zugeordnet sind. Beispielsweise kann der Teil der Identifikationskennungen ein gemeinsames Präfix und/oder ein gemeinsames Suffix der Identifikationskennungen sein. Die Auslesevorrichtung kann ausgebildet sein, wenn der Teil der Identifikationskennung des Wäschestücks nicht der Referenzidentifikation der Wäschestücke entspricht, die während des ersten Zeitintervalls ausgelesene Identifikationskennung des Wäschestücks nicht in der ersten Wäscheliste zu speichern und/oder die während des zweiten Zeitintervalls ausgelesene Identifikationskennung des Wäschestücks nicht in der zweiten Wäscheliste zu speichern.

Die Referenzidentifikationsinformation kann eine aller dem Wäschepflegegerät bekannten Wäschestücke zugeordnete Referenzidentifikationsinformation sein.

In einer vorteilhaften Ausführungsform umfasst die Nutzerschnittstelle eine an dem Wäschestückaufnahmebereich angeordnete Schnittstelle, insbesondere eine an dem Wäschestückaufnahmebereich angeordnete Sprachschnittstelle oder einen an dem Wäschestückaufnahmebereich angeordneten Smart Mirror, und/oder ein Endgerät des Nutzers, insbesondere ein mobiles Endgerät des Nutzers.

Dadurch wird der technische Vorteil erreicht, dass die Positionsinformation dem Nutzer effizient bereitgestellt werden kann.

In einer vorteilhaften Ausführungsform ist die Steuerung ausgebildet, basierend auf den Identifikationskennungen der erfassten Identifikationselemente eine Nutzerinformation für den Nutzer des Wäschestückerfassungssystems zu erzeugen und die Nutzerinformation an die Nutzerschnittstelle zu übermitteln, wobei die Nutzerschnittstelle ausgebildet ist, dem Nutzer des Wäschestückerfassungssystems die Nutzerinformation mitzuteilen, wobei die Nutzerinformation einen zugeordneten Nutzer, visuelle Darstellungen, eine Anzahl, eine Farbe, eine Herstellerinformation, einen Zustand, einen Typ, eine Tragehäufigkeit und/oder Hinweise zur Behandlung von in dem zumindest einen Wäschestückaufnahmebereich befindlichen Wäschestücken umfasst.

Dadurch wird der technische Vorteil erreicht, dass dem Nutzer über die Nutzerinformationen Informationen zur effizienten Nutzung der Wäschestücke bereitgestellt werden können.

Beispielsweise kann die Tragehäufigkeit von der Steuerung basierend auf einer Erfassungshistorie, insbesondere einer Änderung einer Wäscheliste, ermittelt werden. Damit können beispielsweise Wäschestücke identifiziert werden, die kaum oder nie getragen werden. Diese können beispielsweise durch den Nutzer an einen weiteren Nutzer weitergegeben werden.

Die visuellen Darstellungen der Wäschestücke können insbesondere jeweilige Bilder der Wäschestücke umfassen. Die visuellen Darstellungen, insbesondere die Bilder, der Wäschestücke können in einem Speicher der Steuerung hinterlegt sein. Die visuellen Darstellungen können einem jeweiligen Herstellerprodukt der Wäschestücke zugeordnet sein.

Die Hinweise zur Behandlung der in dem zumindest einen Wäschestückaufnahmebereich befindlichen Wäschestücke können beispielsweise ein ausgewähltes Waschmittel aus einer Vielzahl von Waschmitteln für die Wäschestücke umfassen.

Alternativ oder zusätzlich kann die Nutzerinformation eine Behandlungshistorie der Wäschestücke umfassen, beispielsweise wie oft die Wäschestücke gewaschen, getrocknet und/oder geschleudert wurden.

Alternativ oder zusätzlich kann die Nutzerinformation angeben, welche Wäschestücke aus dem Wäschestückaufnahmebereich für eine effiziente Behandlung der Wäschestücke in einem Wäschepflegegerät des Wäschestückerfassungssystems entnommen werden können.

Alternativ oder zusätzlich kann die Nutzerinformation angeben, welche Wäschestücke noch zur Ablage in dem Wäschestückaufnahmebereich aus einer Erfassung einer außerhalb des Wäschestückaufnahmebereichs angeordneten externen Auslesevorrichtung zusätzlich erwartet werden. Die externe Auslesevorrichtung kann beispielsweise durch eine externe Waschmaschine, einen externen Trockner, und/oder einen Ablageort für Wäschestücke umfasst sein.

In einer vorteilhaften Ausführungsform ist die Steuerung ausgebildet, den Sensorerfassungsbereich des Sensorelements, und/oder einen weiteren Sensorerfassungsbereich eines weiteren Sensorelements, in Abhängigkeit der Dimensionen des zumindest einen Wäschestückaufnahmebereichs anzupassen.

Dadurch wird der technische Vorteil erreicht, dass die Identifikationskennungen innerhalb des zumindest einen Wäschestückaufnahmebereichs effizient erfasst werden können, beispielsweise mit einer hohen Erfassungswahrscheinlichkeit, und außerhalb des zumindest einen Wäschestückaufnahmebereichs nicht oder nur selten erfasst werden können, beispielsweise mit einer niedrigen Erfassungswahrscheinlichkeit. Damit kann eine Aussagekraft der zumindest einen Positionsinformation erhöht werden. Beispielsweise kann die Steuerung ausgebildet sein, den Sensorerfassungsbereich auf den Wäschestückaufnahmebereich zu begrenzen, um das Sensorelement und/oder das weitere Sensorelement in Abhängigkeit der Dimensionen des zumindest einen Wäschestückaufnahmebereichs anzupassen.

Der Sensorerfassungsbereich des Sensorelements und/oder der weitere Sensorerfassungsbereich des weiteren Sensorelements können beispielsweise nacheinander durchgemessen werden. Beispielsweise kann die Steuerung ausgebildet sein, eine Vielzahl von Sensorerfassungsbereichen einer Vielzahl von Sensorelementen in Abhängigkeit der Dimensionen des zumindest einen Wäschestückaufnahmebereichs anzupassen, insbesondere nacheinander, bis die maximale Anzahl der Vielzahl an Sensorelementen erreicht wurde.

In einer vorteilhaften Ausführungsform umfasst das Sensorelement und/oder das weitere Sensorelement eine Antenne, wobei die Steuerung ausgebildet ist, eine elektrische Leistung der Antenne des Sensorelements und/oder des weiteren Sensorelements in Abhängigkeit der Dimensionen des zumindest einen Wäschestückaufnahmebereichs, und insbesondere einer Kabellänge der Antenne, anzupassen.

Dadurch wird der technische Vorteil erreicht, dass das Sensorelement und/oder das weitere Sensorelement über die Anpassung der elektrischen Leistung der Antenne effizient angepasst werden kann. Hierbei kann die Steuerung ausgebildet sein, einen Typ und/oder eine Schaltung der Antenne zu berücksichtigen. Der Typ der Antenne kann beispielsweise umfassen, ob die Antenne linear polarisiert, zirkular polarisiert oder abwechselnd linear und zirkular polarisiert ist. Der Typ der Antenne kann beispielsweise umfassen, ob die Antenne statisch oder durch einen Antrieb bewegbar ist. Die Steuerung kann beispielsweise bei einer bewegbaren Antenne ausgebildet sein, ein Ansteuersignal des Antriebs der Antenne anzupassen, um den Sensorerfassungsbereich des Sensorelements und/oder den weiteren Sensorerfassungsbereich des weiteren Sensorelements in Abhängigkeit der Dimensionen des zumindest einen Wäschestückaufnahmebereichs anzupassen. Die Schaltung der Antenne kann beispielsweise eine Position der Antenne in einer Reihenschaltung von Antennen umfassen und/oder eine Anzahl von Antennen in der Reihenschaltung von Antennen umfassen.

In einer vorteilhaften Ausführungsform umfasst der zumindest eine Wäschestückaufnahmebereich einen Bewegungsunterbereich, durch welchen die Wäschestücke durch den Nutzer in und/oder aus dem zumindest einen Wäschestückaufnahmebereich beförderbar sind, wobei das Sensorelement und/oder das weitere Sensorelement auf den Bewegungsunterbereich des zumindest einen Wäschestückaufnahmebereichs ausgerichtet ist und/oder an dem Bewegungsunterbereich des zumindest einen Wäschestückaufnahmebereichs positioniert ist.

Dadurch wird der technische Vorteil erreicht, dass durch eine Ausrichtung auf den Bewegungsunterbereich und/oder eine Positionierung an dem Bewegungsunterbereich das Sensorelement und/oder das weitere Sensorelement den Wäschestückaufnahmebereich effizient überwachen kann. Der Bewegungsunterbereich kann ein Bewegungsunterbereichsvolumen aufweisen, welches kleiner als ein Wäschestückaufnahmebereichsvolumen des zumindest einen Wäschestückaufnahmebereichs sein kann.

In einer vorteilhaften Ausführungsform ist der zumindest eine Wäschestückaufnahmebereich durch eine Abschirmung, insbesondere eine metallische Fläche und/oder ein metallisches Geflecht und/oder Kohlefasern, zumindest abschnittsweise oder vollständig begrenzt, wobei die Abschirmung ausgebildet ist, ein Erfassen von Wäschestücken durch das Sensorelement und/oder das weitere Sensorelement außerhalb des zumindest einen Wäschestückaufnahmebereichs zumindest bereichsweise oder vollständig zu verhindern oder zu reduzieren.

Dadurch wird der technische Vorteil erreicht, dass das Sensorelement und/oder das weitere Sensorelement Wäschestücke außerhalb des Wäschestückaufnahmebereichs nicht oder nur selten erfassen kann, womit eine Aussagekraft der zumindest einen Positionsinformation erhöht werden kann.

Die Abschirmung kann an das Sensorelement und/oder das weitere Sensorelement angepasst sein. Beispielsweise kann, wenn das Sensorelement und/oder das weitere Sensorelement ein Ultrahochfrequenz-RFID-Sensorelement mit einem Frequenzband im Bereich von 900 MHz, beispielsweise zwischen 865 MHz und 921 MHz, sich eine Wellenlänge der elektromagnetischen Wellen der Antenne zu λ=33cm ergeben. Der Abstand von einzelnen Drähten des metallischen Geflechts kann dann bis zu einem Zehntel der Wellenlänge der elektromagnetischen Wellen der Antenne betragen, beispielweise ca. 3 cm nicht überschreiten.

Die Kohlefasern der Abschirmung können aus sehr dünnen Fasern aus Kohlenstoff bestehen, die eine hohe elektrische Leitfähigkeit aufweisen können. Durch die Verwendung von Kohlefaser können Strahlungen vorteilhaft absorbiert und abgeleitet werden.

In einer vorteilhaften Ausführungsform umfasst das Wäschestückerfassungssystem ein weiteres Sensorelement, welches ausgebildet ist, die Identifikationselemente der Wäschestücke in einem weiteren Sensorerfassungsbereich innerhalb des zumindest einen Wäschestückaufnahmebereichs zu erfassen; wobei das weitere Sensorelement unterschiedlich, insbesondere winklig und/oder versetzt, zu dem Sensorelement auf den Wäschestückaufnahmebereich ausgerichtet ist; und/oder wobei sich der Sensorerfassungsbereich und der weitere Sensorerfassungsbereich unterscheiden, insbesondere wobei sich der Sensorerfassungsbereich und der weitere Sensorerfassungsbereich überlappen.

Dadurch wird der technische Vorteil erreicht, dass die Identifikationselemente effizient erfasst werden können. Das weitere Sensorelement, insbesondere eine Antenne des weiteren Sensorelements, kann unterschiedlich, insbesondere winklig und/oder versetzt, zu dem Sensorelement auf den Wäschestückaufnahmebereich, insbesondere auf den Bewegungsunterbereich, ausgerichtet sein.

In einer vorteilhaften Ausführungsform ist in dem zumindest einen Wäschestückaufnahmebereich ein erstes Strukturelement, insbesondere eine erste Wand, und ein zweites Strukturelement, insbesondere eine zweite Wand, angeordnet, wobei das erste Strukturelement, insbesondere die erste Wand, parallel oder winklig zu dem zweiten Strukturelement, insbesondere der zweiten Wand, angeordnet ist, wobei das Sensorelement an dem ersten Strukturelement, insbesondere der ersten Wand, angeordnet ist, und wobei das weitere Sensorelement an dem zweiten Strukturelement, insbesondere der zweiten Wand, angeordnet ist.

Dadurch wird der technische Vorteil erreicht, dass das Sensorelement und das weitere Sensorelement effizient angeordnet werden können.

In einer vorteilhaften Ausführungsform umfasst das Wäschestückerfassungssystem einen mit dem Sensorelement und/oder dem weiteren Sensorelement elektrisch verbundenen Bewegungssensor, insbesondere einen Lichtsensor an einem Bewegungsunterbereich des zumindest einen Wäschestückaufnahmebereichs, wobei das Sensorelement und/oder das weitere Sensorelement ausgebildet ist, die Identifikationselemente der Wäschestücke in dem Sensorerfassungsbereich innerhalb des zumindest einen Wäschestückaufnahmebereichs ansprechend auf ein Signal des Bewegungssensors zu erfassen; und/oder umfasst das Wäschestückerfassungssystem einen mit dem Sensorelement und/oder dem weiterem Sensorelement elektrisch verbundenen Nahfeldsensor, insbesondere einen Bluetooth-Sensor, welcher ausgebildet ist, die Anwesenheit eines mobilen Endgeräts des Nutzers zu erfassen, wobei das Sensorelement und/oder das weitere Sensorelement ausgebildet ist, die Identifikationselemente der Wäschestücke in dem Sensorerfassungsbereich innerhalb des zumindest einen Wäschestückaufnahmebereichs ansprechend auf ein Signal des Nahfeldsensors zu erfassen; und/oder ist die Nutzerschnittstelle ausgebildet ist, eine Eingabe eines Nutzers zu erfassen, wobei das Sensorelement und/oder das weitere Sensorelement ausgebildet ist, die Identifikationselemente der Wäschestücke in dem Sensorerfassungsbereich innerhalb des zumindest einen Wäschestückaufnahmebereichs ansprechend auf die Eingabe des Nutzers zu erfassen; und/oder ist das Sensorelement und/oder das weitere Sensorelement ausgebildet, die Identifikationselemente der Wäschestücke in dem Sensorerfassungsbereich innerhalb des zumindest einen Wäschestückaufnahmebereichs in regelmäßigen Zeitintervallen kontinuierlich zu erfassen.

Dadurch wird der technische Vorteil erreicht, dass eine Erfassung der Identifikationskennungen nutzergesteuert, bewegungsgesteuert und/oder kontinuierlich erfolgen kann.

Gemäß einem zweiten Aspekt wird die erfindungsgemäße Aufgabe gelöst durch ein Verfahren zum Betreiben eines Wäschestückerfassungssystems mit zumindest einem Wäschestückaufnahmebereich zur Aufnahme von Wäschestücken, wobei die Wäschestücke jeweils ein Identifikationselement aufweisen, welches eine Identifikationskennung aufweist, welche mit einem Wäschestück korreliert ist; und einem Sensorelement, welches ausgebildet ist, die Identifikationselemente der Wäschestücke in einem Sensorerfassungsbereich innerhalb des zumindest einen Wäschestückaufnahmebereichs zu erfassen, einer Steuerung, welche mit dem Sensorelement kommunikationstechnisch verbunden ist, und einer Nutzerschnittstelle, welche mit der Steuerung kommunikationstechnisch verbunden ist, wobei das Verfahren umfasst: Erzeugen zumindest einer Positionsinformation der Wäschestücke durch die Steuerung basierend auf den Identifikationskennungen der erfassten Identifikationselemente; Übermitteln der zumindest einen Positionsinformation der Wäschestücke an die Nutzerschnittstelle durch die Steuerung; und Mitteilen der zumindest einen Positionsinformation der Wäschestücke für einen Nutzer des Wäschestückerfassungssystems durch die Nutzerschnittstelle.

In einer vorteilhaften Ausführungsform kann das Verfahren umfassen: Erfassen der Dimensionen des zumindest einen Wäschestückaufnahmebereichs; Übermitteln der erfassten Dimensionen an die Steuerung; und Anpassen des Sensorerfassungsbereichs des Sensorelements und/oder eines weiteren Sensorelements basierend auf den übermittelten Dimensionen durch die Steuerung.

Dadurch kann das Sensorelement und/oder das weitere Sensorelement effizient betrieben werden. Das Erfassen der Dimensionen des zumindest einen Wäschestückaufnahmebereichs kann beispielsweise durch das Sensorelement, durch das weitere Sensorelement und/oder durch eine Nutzereingabe des Nutzers über die Nutzerschnittstelle durchgeführt werden.

Die für das Wäschestückerfassungssystem gemäß dem ersten Aspekt genannten Ausführungsformen sind ebenfalls Ausführungsformen für das Verfahren gemäß dem zweiten Aspekt.

Die für das Verfahren gemäß dem zweiten Aspekt genannten Ausführungsformen sind ebenfalls Ausführungsformen für das Wäschestückerfassungssystem gemäß dem ersten Aspekt.

Ausführungsbeispiele der Erfindung sind in den Zeichnungen dargestellt und werden im Folgenden näher beschrieben.

Es zeigen:
- Fig. 1: eine schematische Ansicht eines Wäschestückerfassungssystems gemäß einer Ausführungsform;
- Fig. 2: eine schematische Ansicht eines Wäschestückerfassungssystems gemäß einer Ausführungsform;
- Fig. 3: eine schematische Ansicht eines Wäschestückerfassungssystems gemäß einer Ausführungsform; und
- Fig. 4: eine schematische Darstellung eines Verfahrens zum Betreiben eines Wäschestückerfassungssystems gemäß einer Ausführungsform.

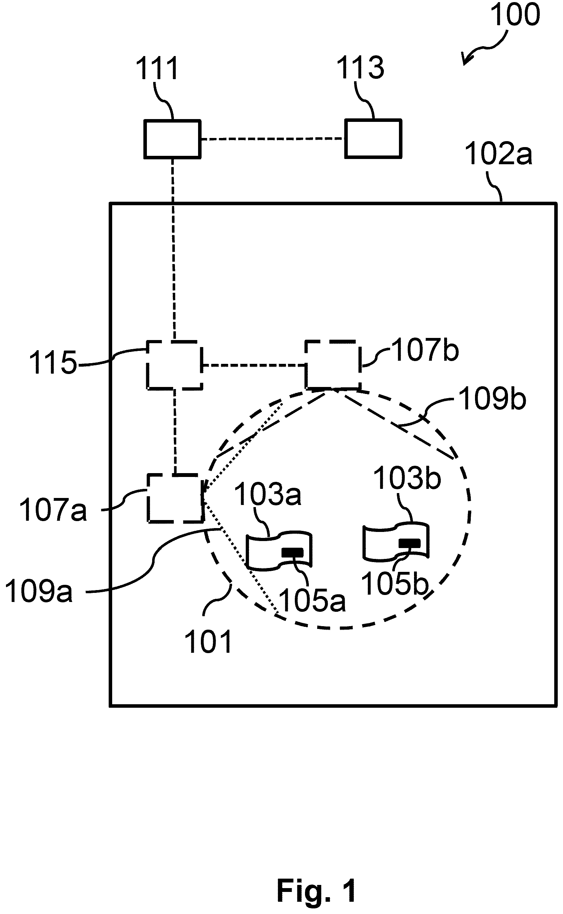

Fig. 1 zeigt eine schematische Ansicht eines Wäschestückerfassungssystems 100 gemäß einer Ausführungsform.

Wie in der Fig.1 schematisch dargestellt ist, umfasst das Wäschestückerfassungssystem 100 zumindest einen Wäschestückaufnahmebereich 101 zur Aufnahme von Wäschestücken 103a,b. Der zumindest eine Wäschestückaufnahmebereich 101 kann, wie schematisch in der Fig. 1 schematisch dargestellt, einen Bereich, insbesondere eine Wäschekammer, eines Wäschepflegegeräts 102a umfassen, wie z.B. eines Wäschetrockners, einer Waschmaschine oder eines Waschtrockners. Ein Nutzer des Wäschestückerfassungssystems 100 kann beispielsweise die Wäschestücke 103a,b in den Wäschestückaufnahmebereich 101 des Wäschepflegegeräts 102a, insbesondere die Wäschekammer, durch eine in der Fig. 1 nicht gezeigte Öffnung des Wäschepflegegeräts 102a einbringen.

Auch wenn dies in der Fig. 1 nicht gezeigt ist, kann der zumindest eine Wäschestückaufnahmebereich 101 alternativ oder zusätzlich einen Bereich eines Möbelstücks 102b, insbesondere eines Kleiderschranks, eines stillen Dieners oder einer Wäscheleiter, einen Bereich eines Wäschekorbs, einen Bereich einer Wäschestückaufhängungsvorrichtung wie einen Kleiderhaken, und/oder einen Bereich eines Zimmers umfassen.

Wie in der Fig. 1 schematisch dargestellt ist, weisen die Wäschestücke 103a,b jeweils ein Identifikationselement 105a,b auf, welches eine Identifikationskennung aufweist, welche mit einem Wäschestück 103a,b korreliert ist. Das Identifikationselement 105a,b kann insbesondere ein RFID-Element umfassen. Die Identifikationskennungen können insbesondere elektronische Productcodes, EPC, umfassen.

Wie in der Fig. 1 schematisch dargestellt ist, umfasst das Wäschestückerfassungssystem 100 ein Sensorelement 107a. Das Sensorelement 107a kann an oder in dem Wäschestückaufnahmebereich 101 angeordnet sein.

Der zumindest eine Wäschestückaufnahmebereich 101 kann einen Bewegungsunterbereich umfassen, welcher in der Fig. 1 beispielsweise durch die Öffnung der Wäschekammer des Wäschepflegegeräts 102a definiert ist. Durch den Bewegungsunterbereich können die Wäschestücke 103a,b durch den Nutzer in und/oder aus dem zumindest einen Wäschestückaufnahmebereich 101, beispielsweise die Wäschekammer, beförderbar sein. Das Sensorelement 107a kann auf den Bewegungsunterbereich des zumindest einen Wäschestückaufnahmebereichs 101 ausgerichtet sein und/oder an dem Bewegungsunterbereich des zumindest einen Wäschestückaufnahmebereichs 101 positioniert sein.

Das Sensorelement 107a ist ausgebildet, die Identifikationselemente 105a,b der Wäschestücke 103a,b in einem Sensorerfassungsbereich 109a innerhalb des zumindest einen Wäschestückaufnahmebereichs 101 zu erfassen.

Wie in der Fig. 1 schematisch dargestellt, kann das Wäschestückerfassungssystem 100 ein weiteres Sensorelement 107b umfassen, welches ausgebildet ist, die Identifikationselemente 105a,b der Wäschestücke 103a,b in einem weiteren Sensorerfassungsbereich 109b innerhalb des zumindest einen Wäschestückaufnahmebereichs 101 zu erfassen. Das weitere Sensorelement 107b kann, wie in der Fig. 1 schematisch dargestellt, unterschiedlich, insbesondere winklig und/oder versetzt, zu dem Sensorelement 107a auf den Wäschestückaufnahmebereich 101, insbesondere den Bewegungsunterbereich, ausgerichtet sein. Alternativ oder zusätzlich kann sich der Sensorerfassungsbereich 109a und der weitere Sensorerfassungsbereich 109b unterscheiden, insbesondere können sich der Sensorerfassungsbereich 109a und der weitere Sensorerfassungsbereich 109b überlappen, beispielsweise an dem Bewegungsunterbereich.

Eine Steuerung 111 des Wäschestückerfassungssystems 100 ist mit dem Sensorelement 107a, und insbesondere dem weiteren Sensorelement 107b, kommunikationstechnisch verbunden, insbesondere über ein Kommunikationsnetzwerk. Das Kommunikationsnetzwerk kann das Internet und/oder ein lokales drahtloses Netzwerk wie ein W-LAN umfassen. Die Steuerung 111 kann in einem Server, insbesondere Cloud-Server, integriert sein.

Das Wäschestückerfassungssystem 100 kann eine in der Fig. 1 schematisch dargestellte Auslesevorrichtung 115 umfassen, insbesondere einer RFID-Auslesevorrichtung, welche mit dem Sensorelement 107a, und/oder mit dem weiteren Sensorelement 107b, elektrisch verbunden ist. Die Auslesevorrichtung 115 kann ausgebildet sein, die Identifikationskennungen auszulesen und an die Steuerung 111 zu übermitteln. Die Steuerung 111 kann ausgebildet sein, die Identifikationskennungen in einer Wäscheliste zu speichern.

Die Steuerung 111 kann ausgebildet sein, den Sensorerfassungsbereich 109a des Sensorelements 107a und/oder den weiteren Sensorerfassungsbereich 109b des weiteren Sensorelements 107b in Abhängigkeit der Dimensionen des zumindest einen Wäschestückaufnahmebereichs 101 anzupassen. Beispielsweise kann die Steuerung 111 ausgebildet sein, den Sensorerfassungsbereich 109a auf den Wäschestückaufnahmebereich 101 zu begrenzen und/oder eine Erfassungswahrscheinlichkeit der Identifikationselemente 105a,b der Wäschestücke 103a,b in dem Sensorerfassungsbereich 109a zu maximieren.

Das Sensorelement 107a und/oder das weitere Sensorelement 107b kann eine in der Fig.1 nicht dargestellte Antenne umfassen. Die Steuerung 111 kann ausgebildet sein, eine elektrische Leistung der Antenne des Sensorelements 107a und/oder des weiteren Sensorelements 107b in Abhängigkeit der Dimensionen des zumindest einen Wäschestückaufnahmebereichs 101, und insbesondere einer Kabellänge der Antenne, anzupassen. Die Antenne kann linear polarisiert, zirkular polarisiert oder abwechselnd linear und zirkular polarisiert sein. Die Antenne kann in Reihenschaltung mit einer weiteren Antenne des Sensorelements 107a und/oder des weiteren Sensorelements 107b betrieben werden. Hierbei kann die Steuerung auch die Kabellänge zwischen der Antenne und der weiteren Antenne berücksichtigen, um die elektrische Leistung der Antenne und damit auch der zweiten Antenne des Sensorelements 107a und/oder des weiteren Sensorelements 107b in Abhängigkeit der Dimensionen des zumindest einen Wäschestückaufnahmebereichs 101 anzupassen. Die Antenne, und insbesondere die zweite Antenne, kann statisch oder bewegbar sein.

Alternativ oder zusätzlich kann der zumindest eine Wäschestückaufnahmebereich 101 durch eine Abschirmung, insbesondere eine metallische Fläche und/oder ein metallisches Geflecht und/oder Kohlefasern, zumindest abschnittsweise oder vollständig begrenzt sein. Die Abschirmung kann ausgebildet sein, ein Erfassen von Wäschestücken 103a,b durch das Sensorelement 107a und/oder das weitere Sensorelement 107b außerhalb des zumindest einen Wäschestückaufnahmebereichs 101 zumindest bereichsweise oder vollständig zu verhindern oder zu reduzieren.

Wie in der Fig.1 schematisch dargestellt ist, umfasst das Wäschestückerfassungssystem 100 eine Nutzerschnittstelle 113, welche mit der Steuerung 111 kommunikationstechnisch verbunden ist, insbesondere über das Kommunikationsnetzwerk. Die Nutzerschnittstelle 113 kann eine an dem Wäschestückaufnahmebereich 101 angeordnete Schnittstelle, insbesondere eine an dem Wäschestückaufnahmebereich 101 angeordnete Sprachschnittstelle oder einen an dem Wäschestückaufnahmebereich 101 angeordneten Smart Mirror, und/oder ein Endgerät des Nutzers, insbesondere ein mobiles Endgerät des Nutzers, umfassen.

Die Steuerung 111 ist ausgebildet, basierend auf den Identifikationskennungen der erfassten Identifikationselemente 105a,b zumindest eine Positionsinformation der Wäschestücke 103a,b in dem zumindest einen Wäschestückaufnahmebereich 101 zu erzeugen und die zumindest eine Positionsinformation der Wäschestücke 103a,b an die Nutzerschnittstelle 113 zu übermitteln.

Die Steuerung 111 kann ausgebildet sein, in einem ersten Zeitintervall die Identifikationskennungen der erfassten Identifikationselemente 105a,b in einer ersten Wäscheliste zu speichern, in einem dem ersten Zeitintervall folgenden zweiten Zeitintervall die Identifikationskennungen der erfassten Identifikationselemente 105a,b in einer zweiten Wäscheliste zu speichern und die zumindest eine Positionsinformation der Wäschestücke 103a,b basierend auf einer Änderung zwischen der ersten und der zweiten Wäscheliste zu erzeugen.

Die zumindest eine Positionsinformation kann anzeigen, dass sich die Wäschestücke 103a,b in einem Wäschestückaufnahmebereich des zumindest einen Wäschestückaufnahmebereichs 101 befinden. Beispielsweise kann das Wäschestückerfassungssystem 100, auch wenn dies in der Fig. 1 nicht dargestellt ist, einen ersten und einen zweiten Wäschestückaufnahmebereich aufweisen, und die Positionsinformation können angeben, dass sich das Wäschestück 103a in dem ersten Wäschestückaufnahmebereich oder in dem zweiten Wäschestückaufnahmebereich befindet.

Die Nutzerschnittstelle 113 ist ausgebildet, dem Nutzer des Wäschestückerfassungssystems 100 die zumindest eine Positionsinformation der Wäschestücke 103a,b mitzuteilen.

Zusätzlich kann die Steuerung 111 ausgebildet sein, basierend auf den Identifikationskennungen der erfassten Identifikationselemente 105a,b eine Nutzerinformation für den Nutzer des Wäschestückerfassungssystems 100 zu erzeugen und die Nutzerinformation an die Nutzerschnittstelle 113 zu übermitteln. Die Nutzerinformation kann einen zugeordneten Nutzer, visuelle Darstellungen, eine Anzahl, eine Farbe, eine Herstellerinformation, einen Zustand, einen Typ, eine Tragehäufigkeit und/oder Hinweise zur Behandlung von in dem zumindest einen Wäschestückaufnahmebereich 101 befindlichen Wäschestücken 103a,b umfassen. Die Nutzerschnittstelle 113 kann ausgebildet sein, dem Nutzer des Wäschestückerfassungssystems 100 die Nutzerinformation mitzuteilen.

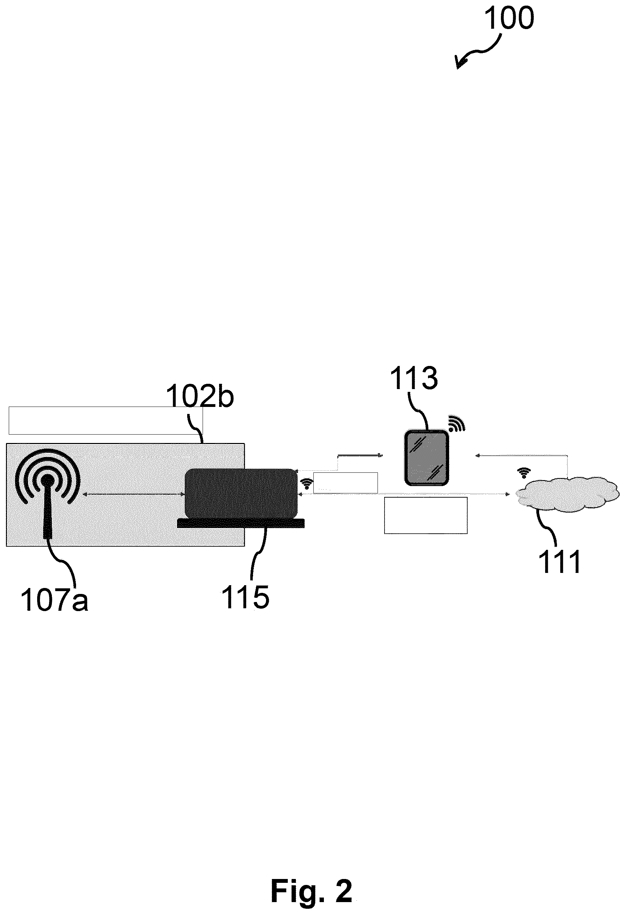

Fig. 2 zeigt eine schematische Ansicht eines Wäschestückerfassungssystems 100 gemäß einer Ausführungsform. Das Wäschestückerfassungssystem 100 kann das zur Fig. 1 beschriebene Wäschestückerfassungssystem 100 sein. Wie bereits zur Fig. 1 beschrieben, kann das Wäschestückerfassungssystem 100 ein Sensorelement 107a, ein weiteres Sensorelement 107b, eine Steuerung 111, eine Nutzerschnittstelle 113 und eine Auslesevorrichtung 115 umfassen.

In der Fig. 2 ist schematisch ein Möbelstück 102b, insbesondere ein Kleiderschrank, des Wäschestückerfassungssystems 100 dargestellt, welches einen Bereich aufweisen kann, der durch den in der Fig. 2 nicht dargestellten zumindest einen Wäschestückaufnahmebereich 101 umfasst sein kann.

Wie in der Fig. 2 schematisch gezeigt, kann das Sensorelement 107a und/oder das weitere Sensorelement 107b eine Antenne umfassen. Die Auslesevorrichtung 115 kann als RFID-Auslesevorrichtung ausgebildet sein. Die RFID-Auslesevorrichtung kann ausgebildet sein, die Wäschestücke 103a,b basierend auf dem Standard ISO 18000-63 auszulesen. Die RFID-Auslesevorrichtung kann ausgebildet sein, zuerst den EPC des RFID-Elements der Wäschestücke auszulesen, bevor weitere Daten des RFID-Elements der Wäschestücke ausgelesen werden. Dadurch kann die Erfassungsrate der Wäschestücke erhöht werden.

Die RFID-Auslesevorrichtung kann ausgebildet sein, die RFID-Elemente der Wäschestücke 103a,b in regelmäßigen Zeitabständen, insbesondere in weniger als 0,05 Sekunden, bevorzugt ca. alle 0,01 Sekunden, auszulesen.

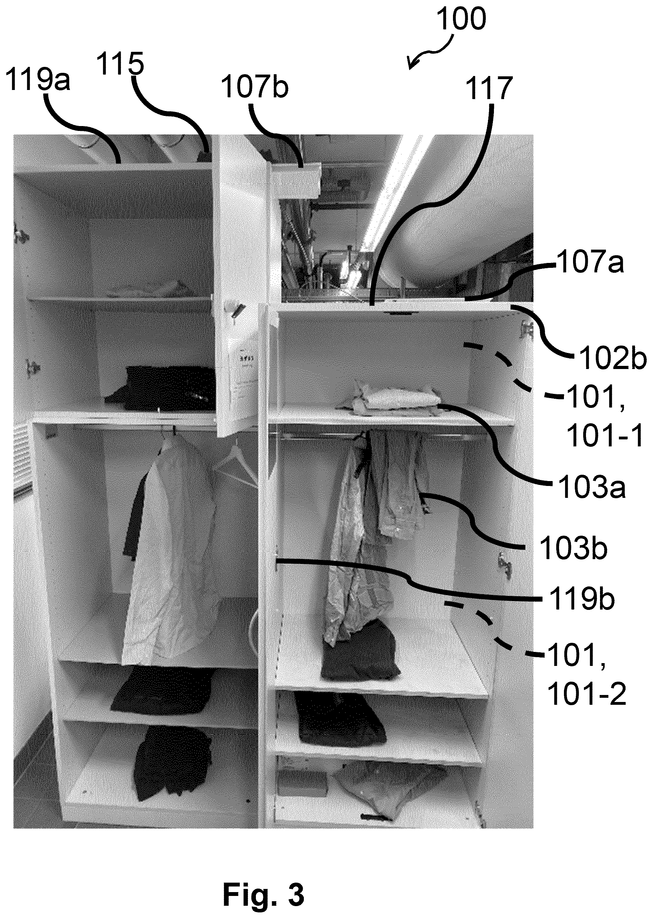

Fig. 3 zeigt eine schematische Ansicht eines Wäschestückerfassungssystems 100 gemäß einer Ausführungsform. Das Wäschestückerfassungssystem 100 kann das zur Fig. 1 beschriebene Wäschestückerfassungssystem 100 sein. Wie bereits zur Fig. 1 beschrieben, kann das Wäschestückerfassungssystem 100 ein Sensorelement 107a, ein weiteres Sensorelement 107b, eine Steuerung 111, eine Nutzerschnittstelle 113 und eine Auslesevorrichtung 115 umfassen.

In der Fig. 3 ist schematisch ein Möbelstück 102b in Form eines Kleiderschranks des Wäschestückerfassungssystems 100 dargestellt, welches den Wäschestückaufnahmebereich 101 umfasst. Wie in der Fig. 3 ferner dargestellt, kann der Wäschestückaufnahmebereich 101 zumindest einen ersten Wäschestückaufnahmeunterbereich 101-1 und einen zweiten Wäschestückaufnahmeunterbereich 101-2 aufweisen, welche in der Fig. 3 beispielhaft durch Fächer des Kleiderschranks definiert sind. Die zumindest eine Positionsinformation kann beispielsweise angeben, dass sich das Wäschestück 103a in dem Wäschestückaufnahmebereich 101 befindet, und/oder dass sich das Wäschestück 103a in dem ersten Wäschestückaufnahmeunterbereich 101-1 oder in dem zweiten Wäschestückaufnahmeunterbereich 101-2 befindet.

In dem in der Fig. 3 dargestellten Beispiel kann die zumindest eine Positionsinformation angeben, dass sich das Wäschestück 103a und das weitere Wäschestück 103b in dem Wäschestückaufnahmebereich 101 befinden. Alternativ oder zusätzlich kann die zumindest eine Positionsinformation angeben, dass sich das Wäschestück 103a in dem ersten Wäschestückaufnahmeunterbereich 101-1 sowie dass sich das weitere Wäschestück 103b in dem zweiten Wäschestückaufnahmeunterbereich 101-2 befindet.

Beispielsweise kann der zumindest eine Wäschestückaufnahmebereich 101 einen zweiten, in der Fig. 3 nicht dargestellten, Wäschestückaufnahmebereich aufweisen. Der weitere Wäschestückaufnahmebereich kann beispielsweise der Bereich eines Wäschekorbs sein, welcher durch ein in der Fig. 3 ebenfalls nicht dargestelltes separates drittes Sensorelement erfasst werden kann. Die zumindest eine Positionsinformation kann beispielsweise angeben, dass sich ein weiteres, in der Fig. 3 nicht dargestelltes Wäschestück, in dem weiteren Wäschestückaufnahmebereich befindet.

Wie in der Fig. 3 gezeigt, kann in dem zumindest einen Wäschestückaufnahmebereich 101 ein erstes Strukturelement 117, insbesondere eine erste Wand, und ein zweites Strukturelement 119a,b, insbesondere eine zweite Wand, angeordnet sein. Das erste Strukturelement 117, insbesondere die erste Wand, kann, wie in der Fig. 3 durch das als Wand ausgebildete Strukturelement 119a beispielhaft dargestellt, parallel zu dem zweiten Strukturelement 119a,b, insbesondere der zweiten Wand, angeordnet sein. Alternativ kann das erste Strukturelement 117, insbesondere die erste Wand, wie in der Fig. 3 durch das als Wand ausgebildete Strukturelement 119b beispielhaft dargestellt, winklig zu dem zweiten Strukturelement 119a,b, insbesondere der zweiten Wand, angeordnet sein. Das Sensorelement 107a kann an dem ersten Strukturelement 117, insbesondere der ersten Wand, angeordnet sein und das weitere Sensorelement 107b kann an dem zweiten Strukturelement 119a,b, insbesondere der zweiten Wand, angeordnet sein, auch wenn die Fig.3 nur das weitere Sensorelement 107b an dem Strukturelement 119a zeigt.

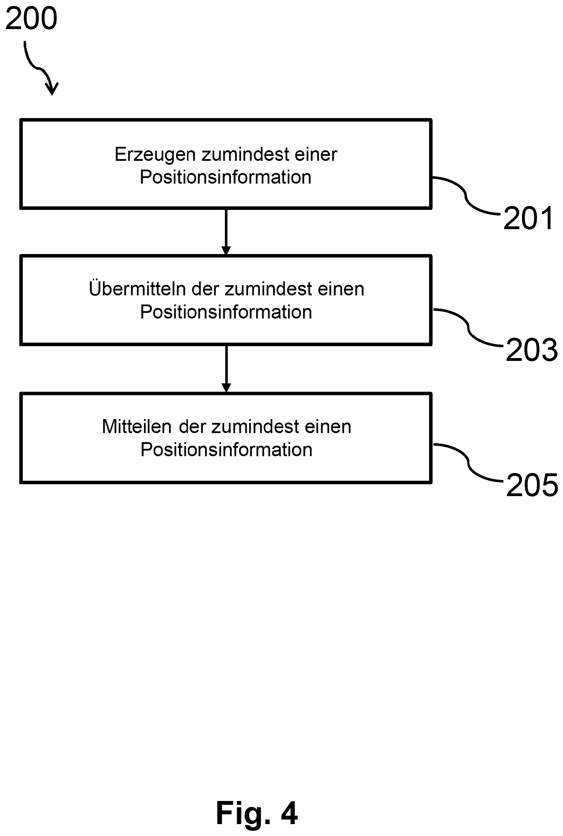

Fig. 4 zeigt eine schematische Darstellung eines Verfahrens 200 zum Betreiben eines Wäschestückerfassungssystems 100 gemäß einer Ausführungsform.

Wie zur Fig. 1 bereits beschrieben und in der Fig.4 nicht dargestellt, umfasst das Wäschestückerfassungssystem 100 zumindest einen Wäschestückaufnahmebereich 101 zur Aufnahme von Wäschestücken 103a,b, wobei die Wäschestücke 103a,b jeweils ein Identifikationselement 105a,b aufweisen, welches eine Identifikationskennung aufweist, welche mit einem Wäschestück 103a,b korreliert ist; und ein Sensorelement 107a, welches ausgebildet ist, die Identifikationselemente 105a,b der Wäschestücke 103a,b in einem Sensorerfassungsbereich 109a innerhalb des zumindest einen Wäschestückaufnahmebereichs 101 zu erfassen, eine Steuerung 111, welche mit dem Sensorelement 107a kommunikationstechnisch verbunden ist, und eine Nutzerschnittstelle 113, welche mit der Steuerung 111 kommunikationstechnisch verbunden ist.

Das Verfahren 200 umfasst als ersten Verfahrensschritt ein Erzeugen 201 zumindest einer Positionsinformation der Wäschestücke 103a,b durch die Steuerung 111 basierend auf den Identifikationskennungen der erfassten Identifikationselemente 105a,b.

Das Verfahren 200 umfasst als zweiten Verfahrensschritt ein Übermitteln 203 der zumindest einen Positionsinformation der Wäschestücke 103a,b an die Nutzerschnittstelle 113 durch die Steuerung 111.

Das Verfahren 200 umfasst als dritten Verfahrensschritt ein Mitteilen 205 der zumindest einen Positionsinformation der Wäschestücke 103a,b für einen Nutzer des Wäschestückerfassungssystems 100 durch die Nutzerschnittstelle 113.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschestückerfassungssystem
- 101: Wäschestückaufnahmebereich
- 101-1: Erster Wäschestückaufnahmeunterbereich
- 101-2: Zweiter Wäschestückaufnahmeunterbereich
- 102a: Wäschepflegegerät
- 102b: Möbelstück
- 103a,b: Wäschestücke
- 105a,b: Identifikationselemente
- 107a: Sensorelement
- 107b: Weiteres Sensorelement
- 109a: Sensorerfassungsbereich
- 109b: Weiterer Sensorerfassungsbereich
- 111: Steuerung
- 113: Nutzerschnittstelle
- 115: Auslesevorrichtung
- 117: Erstes Strukturelement
- 119: Zweites Strukturelement
- 200: Verfahren zum Betreiben eines Wäschestückerfassungssystems
- 201: Erster Verfahrensschritt: Erzeugen zumindest einer Positionsinformation
- 203: Zweiter Verfahrensschritt: Übermitteln der zumindest einen Positionsinformation
- 205: Dritter Verfahrensschritt: Mitteilen der zumindest einen Positionsinformation

## Patentansprüche

1. Wäschestückerfassungssystem (100), umfassend:
zumindest einen Wäschestückaufnahmebereich (101) zur Aufnahme von Wäschestücken (103a,b), wobei die Wäschestücke (103a,b) jeweils ein Identifikationselement (105a,b) aufweisen, welches eine Identifikationskennung aufweist, welche mit einem Wäschestück (103a,b) korreliert ist; und
ein Sensorelement (107a), welches ausgebildet ist, die Identifikationselemente (105a,b) der Wäschestücke (103a,b) in einem Sensorerfassungsbereich (109a) innerhalb des zumindest einen Wäschestückaufnahmebereichs (101) zu erfassen,
eine Steuerung (111), welche mit dem Sensorelement (107a) kommunikationstechnisch verbunden ist, und
eine Nutzerschnittstelle (113), welche mit der Steuerung (111) kommunikationstechnisch verbunden ist,
**dadurch gekennzeichnet, dass** die Steuerung (111) ausgebildet ist, basierend auf den Identifikationskennungen der erfassten Identifikationselemente (105a,b) zumindest eine Positionsinformation der Wäschestücke (103a,b) in dem zumindest einen Wäschestückaufnahmebereich (101) zu erzeugen und die zumindest eine Positionsinformation der Wäschestücke (103a,b) an die Nutzerschnittstelle (113) zu übermitteln, wobei die Nutzerschnittstelle (113) ausgebildet ist, einem Nutzer des Wäschestückerfassungssystems (100) die zumindest eine Positionsinformation der Wäschestücke (103a,b) mitzuteilen.

2. Wäschestückerfassungssystem (100) nach Anspruch 1, wobei der zumindest eine Wäschestückaufnahmebereich (101) einen Bereich eines Wäschepflegegeräts (102a), insbesondere einen Bereich einer Wäschekammer eines Wäschepflegegeräts, einen Bereich eines Möbelstücks (102b), insbesondere eines Kleiderschranks, eines stillen Dieners oder einer Wäscheleiter, einen Bereich eines Wäschekorbs, einen Bereich einer Wäschestückaufhängungsvorrichtung und/oder einen Bereich eines Zimmers umfasst.

3. Wäschestückerfassungssystem (100) nach einem der Ansprüche 1 oder 2, umfassend eine Auslesevorrichtung (115), wobei das Sensorelement (107a) und/oder ein weiteres Sensorelement (107b) mit der Auslesevorrichtung (115) elektrisch verbunden ist, wobei die Auslesevorrichtung (115) ausgebildet ist, die Identifikationskennungen auszulesen und an die Steuerung (111) zu übermitteln, wobei die Steuerung (111) ausgebildet ist, die Identifikationskennungen in einer Wäscheliste zu speichern.

4. Wäschestückerfassungssystem (100) nach Anspruch 3, wobei die Auslesevorrichtung (115) eine RFID-Auslesevorrichtung (115) und das Identifikationselement (105a,b) ein RFID-Element umfasst, wobei insbesondere die Identifikationskennungen elektronische Productcodes, EPC, umfassen.

5. Wäschestückerfassungssystem (100) nach einem der vorhergehenden Ansprüche, wobei die Steuerung (111) ausgebildet ist, in einem ersten Zeitintervall die Identifikationskennungen der erfassten Identifikationselemente (105a,b) in einer ersten Wäscheliste zu speichern, wobei die Steuerung (111) ausgebildet ist, in einem dem ersten Zeitintervall folgenden zweiten Zeitintervall die Identifikationskennungen der erfassten Identifikationselemente (105a,b) in einer zweiten Wäscheliste zu speichern, wobei die Steuerung (111) ausgebildet ist, die zumindest eine Positionsinformation der Wäschestücke (103a,b) basierend auf einer Änderung zwischen der ersten und der zweiten Wäscheliste zu erzeugen.

6. Wäschestückerfassungssystem (100) nach einem der vorhergehenden Ansprüche, wobei die Nutzerschnittstelle (113) eine an dem Wäschestückaufnahmebereich (101) angeordnete Schnittstelle, insbesondere eine an dem Wäschestückaufnahmebereich (101) angeordnete Sprachschnittstelle oder einen an dem Wäschestückaufnahmebereich (101) angeordneten Smart Mirror, und/oder ein Endgerät des Nutzers, insbesondere ein mobiles Endgerät des Nutzers, umfasst.

7. Wäschestückerfassungssystem (100) nach einem der vorhergehenden Ansprüche, wobei die Steuerung (111) ausgebildet ist, basierend auf den Identifikationskennungen der erfassten Identifikationselemente (105a,b) eine Nutzerinformation für den Nutzer des Wäschestückerfassungssystems (100) zu erzeugen und die Nutzerinformation an die Nutzerschnittstelle (113) zu übermitteln, wobei die Nutzerschnittstelle (113) ausgebildet ist, dem Nutzer des Wäschestückerfassungssystems (100) die Nutzerinformation mitzuteilen, wobei die Nutzerinformation einen zugeordneten Nutzer, visuelle Darstellungen, eine Anzahl, eine Farbe, eine Herstellerinformation, einen Zustand, einen Typ, eine Tragehäufigkeit und/oder Hinweise zur Behandlung von in dem zumindest einen Wäschestückaufnahmebereich (101) befindlichen Wäschestücken (103a,b) umfasst.

8. Wäschestückerfassungssystem (100) nach einem der vorhergehenden Ansprüche, wobei die Steuerung (111) ausgebildet ist, den Sensorerfassungsbereich (109a) des Sensorelements (107a) und/oder einen weiteren Sensorerfassungsbereich (109b) eines weiteren Sensorelements (107b) in Abhängigkeit der Dimensionen des zumindest einen Wäschestückaufnahmebereichs (101) anzupassen.

9. Wäschestückerfassungssystem (100) nach Anspruch 8, wobei das Sensorelement (107a) und/oder ein weiteres Sensorelement (107b) eine Antenne umfasst, wobei die Steuerung (111) ausgebildet ist, eine elektrische Leistung der Antenne des Sensorelements (107a) und/oder des weiteren Sensorelements (107b) in Abhängigkeit der Dimensionen des zumindest einen Wäschestückaufnahmebereichs (101), und insbesondere einer Kabellänge der Antenne, anzupassen.

10. Wäschestückerfassungssystem (100) einem der vorhergehenden Ansprüche, wobei der zumindest eine Wäschestückaufnahmebereich (101) einen Bewegungsunterbereich umfasst, durch welchen die Wäschestücke (103a,b) durch den Nutzer in und/oder aus dem zumindest einen Wäschestückaufnahmebereich (101) beförderbar sind, wobei das Sensorelement (107a) und/oder ein weiteres Sensorelement (107b) auf den Bewegungsunterbereich des zumindest einen Wäschestückaufnahmebereichs (101) ausgerichtet ist und/oder an dem Bewegungsunterbereich des zumindest einen Wäschestückaufnahmebereichs (101) positioniert ist.

11. Wäschestückerfassungssystem (100) nach einem der vorhergehenden Ansprüche, wobei der zumindest eine Wäschestückaufnahmebereich (101) durch eine Abschirmung, insbesondere eine metallische Fläche und/oder ein metallisches Geflecht und/oder Kohlefasern, zumindest abschnittsweise oder vollständig begrenzt ist, wobei die Abschirmung ausgebildet ist, ein Erfassen von Wäschestücken (103a,b) durch das Sensorelement (107a) und/oder ein weiteres Sensorelement (107b) außerhalb des zumindest einen Wäschestückaufnahmebereichs (101) zumindest bereichsweise oder vollständig zu verhindern oder zu reduzieren.

12. Wäschestückerfassungssystem (100) nach einem der vorhergehenden Ansprüche, wobei das Wäschestückerfassungssystem (100) ein weiteres Sensorelement (107b) umfasst, welches ausgebildet ist, die Identifikationselemente (105a,b) der Wäschestücke (103a,b) in einem weiteren Sensorerfassungsbereich (109b) innerhalb des zumindest einen Wäschestückaufnahmebereichs (101) zu erfassen;
wobei das weitere Sensorelement (107b) unterschiedlich, insbesondere winklig und/oder versetzt, zu dem Sensorelement (107a) auf den Wäschestückaufnahmebereich (101) ausgerichtet ist; und/oder
wobei sich der Sensorerfassungsbereich (109a) und der weitere Sensorerfassungsbereich (109a) unterscheiden, insbesondere wobei sich der Sensorerfassungsbereich (109a) und der weitere Sensorerfassungsbereich (109b) überlappen.

13. Wäschestückerfassungssystem (100) nach Anspruch 12, wobei in dem zumindest einen Wäschestückaufnahmebereich (101) ein erstes Strukturelement (117), insbesondere eine erste Wand, und ein zweites Strukturelement (119a,b), insbesondere eine zweite Wand, angeordnet ist, wobei das erste Strukturelement (117), insbesondere die erste Wand, parallel oder winklig zu dem zweiten Strukturelement (119a,b), insbesondere der zweiten Wand, angeordnet ist, wobei das Sensorelement (107a) an dem ersten Strukturelement (117), insbesondere der ersten Wand, angeordnet ist, und wobei das weitere Sensorelement (107b) an dem zweiten Strukturelement (119a,b), insbesondere der zweiten Wand, angeordnet ist.

14. Wäschestückerfassungssystem (100) nach einem der vorhergehenden Ansprüche, wobei das Wäschestückerfassungssystem (100) einen mit dem Sensorelement (107a) und/oder einem weiteren Sensorelement (107b) elektrisch verbundenen Bewegungssensor, insbesondere einen Lichtsensor an einem Bewegungsunterbereich des zumindest einen Wäschestückaufnahmebereichs (101), umfasst, wobei das Sensorelement (107a) und/oder das weitere Sensorelement (107b) ausgebildet ist, die Identifikationselemente (105a,b) der Wäschestücke (103a,b) in dem Sensorerfassungsbereich (109a) innerhalb des zumindest einen Wäschestückaufnahmebereichs (101) ansprechend auf ein Signal des Bewegungssensors zu erfassen, und/oder
wobei das Wäschestückerfassungssystem (100) einen mit dem Sensorelement (107a) und/oder dem weiteren Sensorelement (107b) elektrisch verbundenen Nahfeldsensor, insbesondere einen Bluetooth-Sensor, umfasst, welcher ausgebildet ist, die Anwesenheit eines mobilen Endgeräts des Nutzers zu erfassen, wobei das Sensorelement (107a) und/oder das weitere Sensorelement (107b) ausgebildet ist, die Identifikationselemente (105a,b) der Wäschestücke (103a,b) in dem Sensorerfassungsbereich (109a) innerhalb des zumindest einen Wäschestückaufnahmebereichs (101) ansprechend auf ein Signal des Nahfeldsensors zu erfassen, und/oder
wobei die Nutzerschnittstelle (113) ausgebildet ist, eine Eingabe eines Nutzers zu erfassen, wobei das Sensorelement (107a) und/oder das weitere Sensorelement (107b) ausgebildet ist, die Identifikationselemente (105a,b) der Wäschestücke (103a,b) in dem Sensorerfassungsbereich (109a) innerhalb des zumindest einen Wäschestückaufnahmebereichs (101) ansprechend auf die Eingabe des Nutzers zu erfassen, und/oder
wobei das Sensorelement (107a) und/oder das weitere Sensorelement (107b) ausgebildet ist, die Identifikationselemente (105a,b) der Wäschestücke (103a,b) in dem Sensorerfassungsbereich (109a) innerhalb des zumindest einen Wäschestückaufnahmebereichs (101) in regelmäßigen Zeitintervallen kontinuierlich zu erfassen.

15. Verfahren (200) zum Betreiben eines Wäschestückerfassungssystems (100) mit zumindest einem Wäschestückaufnahmebereich (101) zur Aufnahme von Wäschestücken (103a,b), wobei die Wäschestücke (103a,b) jeweils ein Identifikationselement (105a,b) aufweisen, welches eine Identifikationskennung aufweist, welche mit einem Wäschestück (103a,b) korreliert ist; und einem Sensorelement (107a), welches ausgebildet ist, die Identifikationselemente (105a,b) der Wäschestücke (103a,b) in einem Sensorerfassungsbereich (109a) innerhalb des zumindest einen Wäschestückaufnahmebereichs (101) zu erfassen, einer Steuerung (111), welche mit dem Sensorelement (107a) kommunikationstechnisch verbunden ist, und einer Nutzerschnittstelle (113), welche mit der Steuerung (111) kommunikationstechnisch verbunden ist,
**dadurch gekennzeichnet, dass** das Verfahren (200) umfasst:
Erzeugen (201) zumindest einer Positionsinformation der Wäschestücke (103a,b) durch die Steuerung (111) basierend auf den Identifikationskennungen der erfassten Identifikationselemente (105a,b);
Übermitteln (203) der zumindest einen Positionsinformation der Wäschestücke (103a,b) an die Nutzerschnittstelle (113) durch die Steuerung (111); und
Mitteilen (205) der zumindest einen Positionsinformation der Wäschestücke (103a,b) für einen Nutzer des Wäschestückerfassungssystems (100) durch die Nutzerschnittstelle (113).
